# EUROPÄISCHE PATENTANMELDUNG

(11) **EP 1 848 100 A2**
(43) Veröffentlichungstag der Anmeldung: **24.10.2007**
(21) Anmeldenummer: 07105009.0
(22) Anmeldetag: 27.03.2007
(51) Int. Cl.: H02M 1/32

(54) **Schaltungsanordnung zum Anschließen eines DC/DC-Wandlers an eine Eingangsspannung**

(30) Priorität: 20.04.2006 DE 102006018430
(71) Anmelder: Siemens Aktiengesellschaft Österreich, 1210 Wien (AT)
(72) Erfinder: Deininger, Robert, 1140, Wien (AT); Kisling, Erich, 2120, Obersdorf (AT)

(57) **Zusammenfassung**

Die Erfindung betrifft eine Schaltungsanordnung zum Anschließen eines insbesondere taktenden DC/DC-Wandlers (1) an eine Eingangsspannung, wobei die Schaltungsanordnung eine Verpolschutzdiode (D), ein parallel dazu angeordnetes Relais (K) und eine Steuerschaltung (2) zur Durchschaltung des Relais (K) bei einer vorgegebenen Polung der Eingangsspannung umfasst und wobei die Steuerschaltung (2) zusätzlich Mittel zur Erzeugung eines dauerhaften Freischaltsignals in Abhängigkeit von der Polung der Eingangsspannung aufweist und wobei des Weiteren mit dem dauerhaften Freischaltsignal ein Freischaltungsanschluss (FR) des DC/DC-Wandler (1) beaufschlagt ist. Eine Änderung des Freischaltsignals auf Sperren verhindert dann, dass der DC/DC-Wandler 1 in Betrieb geht, wenn als Eingangsspannung versehentlich eine in nicht vorgegebener Weise gepolte Gleichspannung oder eine Wechselspannung anliegt.

## Beschreibung

Die Erfindung betrifft eine Schaltungsanordnung zum Anschließen eines insbesondere taktenden DC/DC-Wandlers an eine Eingangsspannung, wobei die Schaltungsanordnung eine Verpolschutzdiode, ein parallel dazu angeordnetes Relais und eine Steuerschaltung zur Durchschaltung des Relais bei einer vorgegebenen Polung der Eingangsspannung umfasst.

Nach dem Stand der Technik werden DC/DC-Wandlern oft Schaltungsanordnungen vorgeschaltet, welche als Verpolschutz dienen. Im einfachsten Fall handelt es sich dabei um eine Verpolschutzdiode. Eine solche Verpolschutzdiode hat die Funktion, eine nicht in vorgegebener Weise gepolte Eingangsspannung abzublocken.

Im Normalbetrieb kommt es dabei zu unerwünschten Verlusten durch die an der Diode abfallenden Durchlassspannung. Es sind deshalb auch Ausführungen von Schaltungsanordnungen bekannt, bei welchen parallel zur Verpolschutzdiode ein Relais angeordnet ist.

In der JP 09337674 A ist beispielsweise ein DC/DC-Wandler mit einer eingangsseitigen Schaltungsanordnung dargestellt, welche eine Verpolschutzdiode, einen Widerstand und ein Relais mit einer geeigneten Steuerung umfasst. Dabei ist die Verpolschutzdiode in der Weise angeordnet, dass die Kathode mit dem vorgegebenen negativen Pol einer anzuschließenden Eingangsgleichspannung verbunden ist. Die Anode der Verpolschutzdiode ist über einen Widerstand und die primärseitige Wicklung des Wandlers mit dem vorgegebenen positiven Pol einer anzuschließenden Eingangsgleichspannung verbunden. Parallel zu der aus Diode und Widerstand gebildeten Reihenschaltung ist ein Relais angeordnet, welches mittels einer Steuerung geöffnet und geschlossen wird. Die Steuerung ist parallel zu Primärwicklung des Wandlers geschaltet und schließt das Relais, sobald an dieser Primärwicklung eine Spannung abfällt.

Der Widerstand dient dazu, eine beim Einschalten oder Anschließen des Wandlers auftretende Spannungsspitze zu dämpfen. Bei einer wie vorgegeben gepolten Gleichspannung fließt nach dem Einschalten Strom durch die Verpolschutzdiode und durch die Primärwicklung des Wandlers, wodurch das Relais mittels Steuerung geschlossen wird. Die Verluste infolge eines Spannungsabfalls an der Verpolschutzdiode und am Widerstand werden damit umgangen.

Liegt als Eingangsspannung eine in nicht vorgesehener Weise gepolte Gleichspannung an, blockt die Verpolschutzdiode ab und es fließt bis auf einen Diodenleckstrom kein Strom. Das Relais bleibt geöffnet.

In der JP 10023740 A ist eine eingangsseitige Schaltungsanordnung für einen DC/DC-Wandler mit einem taktenden Schaltelement dargestellt. Die Schaltungsanordnung umfasst eine Verpolschutzdiode, einen Widerstand und ein Relais. Zusätzlich ist eine Leuchtdiode mit einem Vorwiderstand parallel zur Verpolschutzdiode angeordnet. Bei einer nicht in vorgesehener Weise gepolten Eingangsspannung fließt Strom durch diese Leuchtdiode, welche als Anzeige für eine Bedienperson dient.

Die Steuerung des Relais ist an die Spannung eines Eingangskondensators angeschlossen, welcher parallel zum Schaltelement des Wandlers geschaltet ist. Bei einer wie vorgesehen gepolten Eingangsgleichspannung lädt sich der Eingangskondensator auf und das Relais schaltet durch. Eine nicht in vorgesehener Weise gepolte Eingangsgleichspannung lädt den Eingangskondensator mit einer umgepolten Ladung auf, weshalb in diesem Fall die Steuerung das Relais nicht schließt. Es fließt lediglich ein geringer Strom durch die Freilaufdiode des Schaltelements und die Leuchtdiode.

Die bekannten Schaltungsanordnungen weisen den Nachteil auf, dass das Relais auch beim Anschließen einer Eingangswechselspannung anzieht und somit ein nicht erwünschter Betrieb möglich ist, der zur Beschädigung einzelner Bauteile führen kann.

Der Erfindung liegt die Aufgabe zugrunde, für eine eingangs genannte Schaltungsanordnung eine Verbesserung gegenüber dem Stand der Technik anzugeben.

Erfindungsgemäß wird diese Aufgabe gelöst mit einer Schaltungsanordnung zum Anschließen eines insbesondere taktenden DC/DC-Wandlers an eine Eingangsspannung, wobei die Schaltungsanordnung eine Verpolschutzdiode, ein parallel dazu angeordnetes Relais und eine Steuerschaltung zur Durchschaltung des Relais bei einer vorgegebenen Polung der Eingangsspannung umfasst und wobei die Steuerschaltung zusätzlich Mittel zur Erzeugung eines dauerhaften Freischaltsignals in Abhängigkeit von der Polung der Eingangsspannung aufweist und wobei des Weiteren mit dem dauerhaften Freischaltsignal ein Freischaltungsanschluss des DC/DC-Wandler beaufschlagt ist.

Eine Änderung des Freischaltsignals auf einen als "Sperren" definierten Signalzustand verhindert dann, dass der DC/DC-Wandler in Betrieb geht, wenn als Eingangsspannung versehentlich eine in nicht vorgegebener Weise gepolte Gleichspannung oder eine Wechselspannung anliegen. Die wie vorgegeben gepolten Halbwellen der Wechselspannung bewirken demnach nicht wie beim Stand der Technik, dass der Wandler mit einer mittels Verpolschutzdiode gleichgerichteten Wechselspannung betrieben wird.

In einer vorteilhaften Ausprägung der Erfindung ist in Reihe mit der Verpolschutzdiode ein Widerstand angeordnet, wobei das Relais parallel zu dieser Reihenschaltung angeordnet ist. Dieser Widerstand dämpft gegebenenfalls eine auftretende Spannungsspitze während eines Einschalt- oder Anschlussvorgangs. Nach dem Abklingen einer solchen Spannungsspitze führt der Widerstand infolge des Schließens des Relais zu keinen Verlusten im Normalbetrieb.

Vorteilhaft ist es des Weiteren, wenn die Steuerschaltung mit dem Steuerstromkreis des Relais derart verbunden ist, dass die Durchschaltung des Relais bei in nicht vorgegebener Weise gepolter Eingangsspannung gesperrt ist. Damit ist sichergestellt, dass bei einer anliegenden Eingangswechselspannung keine Überbrückung der Verpolschutzdiode erfolgt. Somit wird beispielsweise verhindert, dass sich über eine gegebenenfalls vorhandene Freilaufdiode eines im Wandler angeordneten Schaltelements ein Stromkreis schließt.

Für den Aufbau der Steuerschaltung ist es von Vorteil, wenn eine aus einer Diode und einem Kondensator bestehende Reihenschaltung an die Eingangspannung angeschlossen ist und wenn parallel zu diesem Kondensator ein Optokoppler in der Weise vorgesehen ist, dass der Fototransistor des Optokopplers eine Hilfsspannung an den Basisanschluss eines Transistors schaltet und dass der Kollektoranschluss des Transistors mit der Hilfsspannung und dem Freischaltungsanschluss verbunden ist und dass der Emitteranschluss des Transistors mit einem Bezugspotenzial verbunden ist. Damit ist eine einfach aufgebaute analoge Steuerschaltung gegeben, die bei in nicht vorgesehener Weise gepolter Eingangsspannung das Freischaltsignal auf den Signalzustand "Sperren" schaltet.

In einer anderen vorteilhaften Ausprägung ist die Steuerschaltung in der Weise aufgebaut, dass eine aus einer Diode und einem Kondensator bestehende Reihenschaltung an die Eingangspannung angeschlossen ist und dass eine am Kondensator anliegende Kondensatorspannung einem Komparator zugeführt ist, welcher bei Überschreitung einer vorgegebenen Schwellspannung eine Änderung des am Freischaltungsanschluss anliegenden Freischaltsignals auslöst. Dabei bietet die Funktion des Komparators die Vorgabe unterschiedlicher Vergleichsspannungen, wodurch das Reaktionsverhalten der Steuerschaltung auf eine als Eingangsspannung anliegenden Wechselspannung justierbar ist.

Von Vorteil ist es zudem, wenn das Relais als mechanisches Relais ausgebildet ist. Mechanische Relais sind zuverlässige Bauteile und verfügen über die notwendige galvanische Trennung zwischen Schalt- und Steuerstromkreis.

Eine Ausbildung des Relais als Halbleiterrelais mit einem Optokoppler zur galvanischen Trennung ist für eine Reduktion der Baugröße und für einen Einsatz in integrierten Schaltungen vorteilhaft.

Die Erfindung wird nachfolgend in beispielhafter Weise unter Bezugnahme auf die beigefügten Figuren erläutert. Es zeigen in schematischer Darstellung:
- Fig. 1: Schaltungsanordnung
- Fig. 2: Schaltung zur Erzeugung eines dauerhaften Freischaltsignals

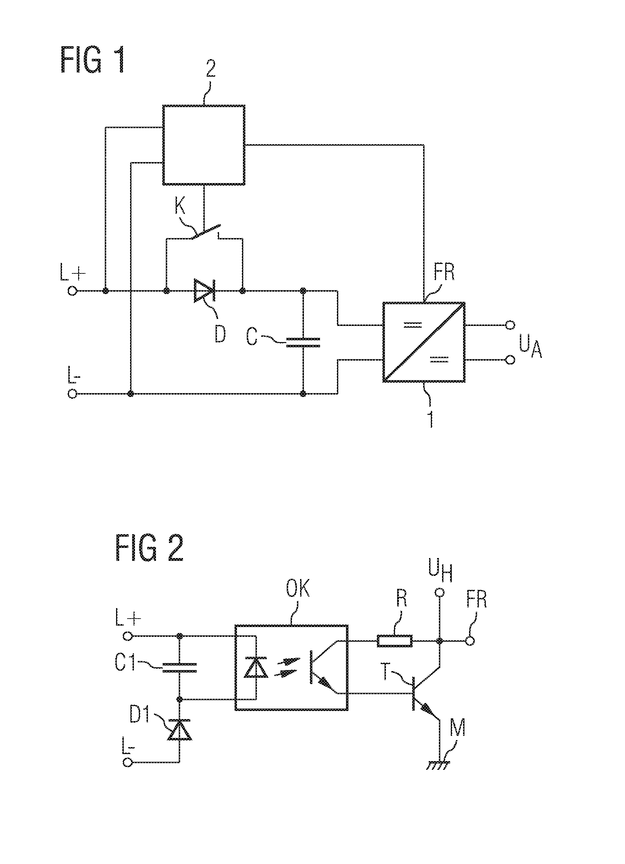

In Figur 1 ist eine beispielhafte Schaltungsanordnung für den Anschluss eines DC/DC-Wandlers 1 an eine Eingangsspannung mit vorgegebener Polung dargestellt. Der vorgegebene positive Pol L+ ist über eine Verpolschutzdiode D an einen ersten Eingang des DC/DC-Wandlers 1 angeschaltet. Ein zweiter Eingang des DC/DC-Wandlers 1 ist mit dem vorgegebenen negativen Pol L-der Eingangsspannung verbunden. Die beiden Eingänge des DC/DC-Wandlers 1 sind zudem über einen Eingangskondensator C als Filterelement miteinander verbunden.

Parallel zur Verpolschutzdiode D ist ein Relais K angeordnet, das mittels einer Steuerschaltung 2 geschaltet wird. In Reihe mit der Verpolschutzdiode D und ebenfalls durch das Relais K überbrückt kann ein Widerstand angeordnet sein, der zur Abdämpfung gegebenenfalls auftretender Einschaltspannungsspitzen dient.

Die Steuerschaltung 2 ist eingangsseitig an die Pole L+, L-der Eingangsspannung angeschaltet und mit dem Schaltstromkreis des Relais K in der Weise verbunden, dass das Relais K nur dann anzieht, wenn eine Eingangsgleichspannung mit vorgegebener Polung anliegt. Bei einer in nicht vorgegebener Weise gepolten Eingangsgleichspannung oder einer Wechselspannung wird der Steuerstromkreis des Relais K gesperrt und das Relais K bleibt offen. Bei einem als Halbleiterrelais ausgebildeten Relais K ist im Gegensatz zu einem mechanischen Relais zur galvanischen Trennung ein Optokoppler vorzusehen. Vorteilhafterweise ist die Steuerschaltung 2 so ausgebildet, dass das Relais K erst dann anzieht, wenn eine gegebenenfalls auftretende Einschaltspannungsspitze abgeklungen ist.

Ein von der Steuerschaltung 2 erzeugtes Freischaltsignal liegt an einem Freischaltungsanschluss FR des taktenden DC/DC-Wandlers 1 an. Die Steuerschaltung 2 funktioniert dann z.B. in der Weise, dass die in nicht vorgesehener Weise gepolten Eingangsspannungsanteile erfasst werden und über einen Optokoppler eine Schaltung angesteuert wird, welche das Relais K für die Überbrückung der Verpolschutzdiode D und den allgemeinen Regelungskreis des DC/DC-Wandlers über den Freischaltungsanschluss FR sperrt.

Der DC/DC-Wandlers 1 ist beispielsweise als taktender Hochsetzsteller, Tiefsetzsteller, Sperrwandler oder Flusswandler ausgebildet und umfasst eine Steuerung für ein Schaltelement, welche durch Änderung des Freischaltsignals gesperrt werden kann.

Damit ergeben sich folgende Betriebszustände:
a) Als Eingangsspannung liegt eine Gleichspannung mit vorgegebener Polung an: Nach dem Anlauf des DC/DC-Wandlers 1 liegt am Ausgang des taktenden DC/DC-Wandlers 1 die Ausgangsspannung U_{A} an und die Verpolschutzdiode D wird durch das Relais K überbrückt. Die Verlustleistung an der Verpolschutzdiode D entfällt und der niederohmige Relaiskontakt bewirkt eine Verbesserung des Wirkungsgrades.
b) Als Eingangsspannung liegt eine in nicht vorgegebener Weise gepolte (verpolte) Gleichspannung an: Die Verpolschutzdiode blockt die Spannung ab, der DC/DC-Wandler 1 läuft nicht an.
c) Als Eingangsspannung liegt eine Wechselspannung an (die maximale Wechselspannung liegt im Bereich der für den DC/DC-Wandler 1 vorgesehenen Eingangsgleichspannung): Die Spannungsanteile mit der vorgegebenen Polung laden über die Verpolschutzdiode D den Eingangskondensator C auf. Durch das Erkennen der nicht in vorgegebener Weise gepolten Spannungsanteile läuft der DC/DC-Wandler 1 aber nicht an und das Relais K wird nicht geschlossen.

In Figur 2 ist eine beispielhafte Steuerschaltung zur Erzeugung eines Freischaltsignals dargestellt. Der vorgegebene negative Pol L- der Eingangsspannung ist über eine Diode D1 und einen Kondensator C1 mit dem vorgegebenen positiven Pol L+ der Eingangsspannung verbunden. Parallel zu diesem Kondensator C1 ist ein Optokoppler OK angeordnet.

Die Diode D1 ist für in nicht vorgegebener Weise gepolte Eingangsspannungen leitend. Bei einer anliegenden Wechselspannung leitet die Diode D1 somit während jener Halbwellen, deren Polung nicht der vorgegeben Polung entspricht. Der Kondensator C1 wird über die Diode D1 aufgeladen.

Ein derart aufgeladener Kondensator C1 entlädt sich über die Fotodiode des Optokopplers OK, wobei der Fototransistor des Optokopplers OK eine Hilfsspannung U_{H} über einen Vorwiderstand R auf den Basisanschluss eines NPN-Transistors T zieht. Der Kollektoranschluss des NPN-Transistors T ist mit der Hilfsspannung U_{H} und der Emitteranschluss mit einem Masseanschluss als Bezugspotenzial M verbunden. Zusätzlich liegt die Hilfsspannung U_{H} am Freischaltungsanschluss FR des DC/DC-Wandlers 1 an.

Diese Schaltung funktioniert in der Weise, dass eine wie vorgegeben gepolte Eingangsspannung durch die Fotodiode im Optokoppler OP abgeblockt wird. Der NPN-Transistor T bleibt somit ausgeschaltet und am Freischaltungsanschluss FR des DC/DC-Wandlers 1 liegt die Hilfsspannung U_{H} als High-Signal an. Der DC/DC-Wandler 1 befindet sich im frei geschalteten Zustand und das Relais K kann anziehen.

Bei umgekehrter Polung der Eingangsspannung lädt sich der Kondensator C1 auf und über den Optokoppler OP wird der NPN-Transistor T eingeschaltet. Das geschieht sowohl bei einer Gleichspannung mit umgekehrter Polung wie auch bei einer Wechselspannung. Die Hilfsspannung U_{H} wird über den eingeschalteten NPN-Transistor T auf das Bezugspotenzial M gezogen und das Freischaltsignal am Freischaltungsanschluss FR des DC/DC-Wandlers 1 fällt auf ein Low-Signal ab. Der DC/DC-Wandler 1 und das Relais K befinden sich im gesperrten Zustand.

Die Schaltung kann auch in der Weise ausgeführt sein, dass ein Low-Signal am Freischaltungsanschluss FR den DC/DC-Wandler 1 frei schaltet und ein High-Signal den DC/DC-Wandler 1 sperrt.

In einer anderen Ausführung der Schaltung ist anstelle einer Transistorschaltung ein Komparator angeordnet, der die am Kondensator C1 anliegende Spannung mit einer vorgegebenen Vergleichsspannung vergleicht. Bei Erreichung der Vergleichsspannung wird eine Änderung des Freischaltsignals ausgelöst und der DC/DC-Wandler 1 sperrt.

Dabei kann mittels einer einstellbaren Vergleichsspannung auf einfache Weise das Ansprechverhalten der Steuerschaltung 2 auf eine nicht vorgegebene Polung der Eingangsspannung beeinflusst werden.

## Patentansprüche

1. Schaltungsanordnung zum Anschließen eines insbesondere taktenden DC/DC-Wandlers (1) an eine Eingangsspannung, wobei die Schaltungsanordnung eine Verpolschutzdiode (D), ein parallel dazu angeordnetes Relais (K) und eine Steuerschaltung (2) zur Durchschaltung des Relais (K) bei einer vorgegebenen Polung der Eingangsspannung umfasst, **dadurch gekennzeichnet, dass** die Steuerschaltung (2) zusätzlich Mittel zur Erzeugung eines dauerhaften Freischaltsignals in Abhängigkeit von der Polung der Eingangsspannung aufweist und dass mit dem dauerhaften Freischaltsignal ein Freischaltungsanschluss (FR) des DC/DC-Wandler (1) beaufschlagt ist.

2. Schaltungsanordnung nach Anspruch 1, **dadurch gekennzeichnet, dass** in Reihe mit der Verpolschutzdiode (D) ein Widerstand angeordnet ist und dass das Relais (K) parallel zu dieser Reihenschaltung angeordnet ist.

3. Schaltungsanordnung nach Anspruch 1 oder 2, **dadurch gekennzeichnet, dass** die Steuerschaltung (2) mit dem Steuerstromkreis des Relais (K) derart verbunden ist, dass die Durchschaltung des Relais (K) bei in nicht vorgegebener Weise gepolter Eingangsspannung gesperrt ist.

4. Schaltungsanordnung nach einem der Ansprüche 1 bis 3, **dadurch gekennzeichnet, dass** die Steuerschaltung (2) in der Weise aufgebaut ist, dass eine aus einer Diode (D1) und einem Kondensator (C1) bestehende Reihenschaltung an die Eingangspannung angeschlossen ist und dass parallel zu diesem Kondensator (C1) ein Optokoppler (OK) in der Weise vorgesehen ist, dass der Fototransistor des Optokopplers (OK) eine Hilfsspannung (U_{H}) an den Basisanschluss eines Transistors (T) schaltet und dass der Kollektoranschluss des Transistors (T) mit der Hilfsspannung (U_{H}) und dem Freischaltungsanschluss (FR) verbunden ist und dass der Emitteranschluss des Transistors (T) mit einem Bezugspotenzial (M) verbunden ist.

5. Schaltungsanordnung nach einem der Ansprüche 1 bis 3, **dadurch gekennzeichnet, dass** die Steuerschaltung (2) in der Weise aufgebaut ist, dass eine aus einer Diode (D1) und einem Kondensator (C1) bestehende Reihenschaltung an die Eingangspannung angeschlossen ist und dass eine am Kondensator (C1) anliegende Kondensatorspannung einem Komparator zugeführt ist, welcher bei Überschreitung einer vorgegebenen Vergleichsspannung eine Änderung des am Freischaltungsanschluss (FR) anliegenden Freischaltsignals auslöst.

6. Schaltungsanordnung nach einem der Ansprüche 1 bis 5, **dadurch gekennzeichnet, dass** das Relais (K) als mechanisches Relais ausgebildet ist.

7. Schaltungsanordnung nach einem der Ansprüche 1 bis 5, **dadurch gekennzeichnet, dass** das Relais (K) als Halbleiterrelais mit einem Optokoppler zur galvanischen Trennung ausgebildet ist.
